Europäisches Patentamt

European Patent Office

Office européen des brevets

(19)

(11) Veröffentlichungsnummer : **0 356 644 B1**

(12) # EUROPÄISCHE PATENTSCHRIFT

(45) Veröffentlichungstag der Patentschrift :
**13.05.92 Patentblatt 92/20**

(51) Int. Cl.$^5$ : **C03C 21/00**

(21) Anmeldenummer : **89111337.5**

(22) Anmeldetag : **22.06.89**

(54) **Verfahren zur Herstellung von Wellenleitern auf einem Glassubstrat durch Ionenaustausch.**

(30) Priorität : **09.08.88 DE 3826942**

(43) Veröffentlichungstag der Anmeldung :
**07.03.90 Patentblatt 90/10**

(45) Bekanntmachung des Hinweises auf die
Patenterteilung :
**13.05.92 Patentblatt 92/20**

(84) Benannte Vertragsstaaten :
**AT BE CH DE ES FR GB GR IT LI LU NL SE**

(56) Entgegenhaltungen :
**DE-A- 2 313 216**
**GB-A- 1 429 908**
**US-A- 3 836 348**

(73) Patentinhaber : **Bodenseewerk Gerätetechnik
GmbH
Alte Nussdorfer Strasse 15 Postfach 1120
W-7770 Überlingen/Bodensee (DE)**

(72) Erfinder : **Froning, Edilbert Alexander Karl
Bodanstrasse 23
W-7772 Oberuhldingen (DE)**
Erfinder : **Langner, Klaus Alexander
Alte Dorfstrasse 61
W-7770 Ueberlingen 12 (DE)**

(74) Vertreter : **Weisse, Jürgen, Dipl.-Phys. et al
Patentanwälte Dipl.-Phys. Jürgen Weisse
Dipl.-Chem. Dr. Rudolf Wolgast Bökenbusch
41 Postfach 11 03 86
W-5620 Velbert 11 Langenberg (DE)**

EP 0 356 644 B1

## Beschreibung

### Technisches Gebiet

Die Erfindung betrifft ein Verfahren zur Herstellung von Wellenleitern in einem Glassubstrat durch Ionenaustausch, mit den Verfahrensschritten:
(a) Aufbringen einer Metallmaske auf das Glassubstrat, wobei diese Metallmaske die Bereiche der zu erzeugenden Wellenleiter freiläßt,
(b) Inkontaktbringen des Substrats mit einer Metallsalzschmelze, welche die gegen Ionen des Glassubstrats auszutauschenden Ionen enthält,

### Zugrundeliegender Stand der Technik

Es ist bekannt, in planparallelen Platten optische Wellenleiter zu erzeugen, in denen Licht durch Totalreflexion geleitet wird. Zu diesem Zweck müssen in der planparallelen Platte Strukturen mit einem Brechungsindex erzeugt werden, der größer als der Brechungsindex des Materials der Platte ist. Es ist bekannt, einen solchen erhöhten Brechungsindex dadurch zu erzeugen, daß in dem Material ein Ionenaustausch hervorgerufen wird, bei welchem Ionen im Material der Platte durch Ionen mit größerem Ionenradius ersetzt werden. Die Oberfläche der Platte wird mittels einer Maske abgedeckt bis auf diejenigen Bereiche, in denen der Brechungsindex erhöht werden soll. Die Platte wird auf erhöhte Temperatur erwärmt und mit geeigneten Substanzen in Kontakt gebracht.Es erfolgt dann ein Ionenaustausch und damit eine Erhöhung des Brechungsindex in den durch die Maske nicht abgedeckten Bereichen.

Die US-A- 3 857 689 beschreibt die Herstellung einer integrierten optischen Schaltung, bei welcher eine Maske auf eine planparallele Platte (Substrat) aufgebracht wird, welche das gewünschte optische Muster festlegt. Die Platte wird dann in ein Bad aus einer Salzschmelze eingebracht. Diese Salzschmelze enthält einwertige positive Ionen, die einen größeren Einfluß auf den Brechungsindex haben als die positiven Ionen im Material der Platte. Es wird dafür gesorgt, daß ein Ionenaustausch stattfindet, bei welchem positive Ionen der Platte durch Ionen der Salzschmelze ersetzt werden. Das bringt eine Erhöhung des Brechungsindex in den oberflächennahen Bereichen, die von der Maske nicht abgedeckt und der Salzschmelze ausgesetzt sind.

Durch die JP-A-58-118 609 ist bekannt, den Ionenaustausch durch Anlegen eines elektrischen Feldes zu unterstützen. Bei dem dort beschriebenen Verfahren wird auf eine planparallele Platte eine Maske und dann eine dünne Silberschicht aufgedampft. Auf die Silberschicht wird eine Anode aus Chrom aufgebracht. Auf der gegenüberliegenden Seite wird eine Kathode aus Aluminium vorgesehen. Die Platte wird erwärmt, und gleichzeitig wird zwischen Anode und Kathode eine Spannung angelegt. Durch das elektrische Feld werden Silberionen in das Material der Platte transportiert. Dadurch wird in den durch die Maske nicht abgedeckten Bereichen ein optischer Wellenleiter mit gegenüber der Platte erhöhtem Brechungsindex erzeugt.

Ein ähnliches Verfahren ist aus der US-A- 3 836 348 bekannt. Auch dort werden zur Herstellung eines optischen integrierten Schaltkreises Ionen aus einer Salzschmelze in ein Glassubstrat eindiffundiert. Hierzu wird das auf einer Seite maskierte Glassubstrat mit der maskierten Seite in die Salzschmelze eingetaucht. Auch der gegenüberliegenden, nicht von der Salzschmelze berührten Seite des Glassubstrates ist eine Elektrode angebracht. Zwischen Salzsubstrat und Elektrode wird eine Gleichspannung angelegt, die die Ionendiffusion in die nicht von der Maske bedeckten Flächenbereiche des Glassubstrates fördert.

Eine weitere Anwendung der feldunterstützten Ionendiffusion in ein Glassubstrat ist aus der GB-A- 14 29 908 bekannt. Dort wird eine flächig geformte Beschichtung eines nicht mit einer Maske versehenen Substrates durch feldunterstütztes Eindiffundieren von Metallen, insbesondere von Kupfer, herbeigeführt. Diese gefärbte Schicht wird später maskiert und geätzt. Schließlich ist es aus der DE-A- 23 13 216 bekannt, bei der Herstellung bzw. Verarbeitung von Bauglas die kontinuierliche Befestigung eines Profilglasbandes vorzugsweise mit U-ähnlichem Querschnitt dadurch herbeizuführen, daß das Profilglasband mit seinen äußeren Seiten durch eine Alkalisalzschmelze, insbesondere durch eine Kalisalzschmelze hindurchgeführt wird und zwar so, daß die Salzschmelze die inneren Seiten des Profilglasbandes nicht berührt. In der Salzschmelze und im Bereich der inneren Seiten des Profilglasbandes sind Elektroden angeordnet, durch die ein Feld aufgebaut wird, daß die Ionendiffusion der Salzschmelze in das Glas fördert, wodurch eine Befestigung des Glases herbeigeführt wird.

Es ist weiterhin bekannt, eine planparallele Platte, die mit Wellenleitern versehen werden soll in waagerechter Lage durch eine mit einem Unterdruck verbundene Saugglocke zu halten. In der Saugglocke ist ein Vorrat von Salzschmelze enthalten. Die der Saugglocke abgewandte Seite der planparallelen Platte ist mit einer Maske versehen. Diese Seite der Platte wird in einen weiteren Vorrat der Salzschmelze eingetaucht. Über Elektroden wird an die Salzschmelzen ein elektrisches Feld angelegt. Auch hier diffundieren positive Ionen größeren Durchmessers aus dem unteren Vorrat von Salzschmelze in die Platte hinein und erzeugen dadurch in den nicht-abgedeckten Bereichen optische Wellenleiter mit erhöhtem Brechungsindex, während andererseits auf der oberen Seite der Platte Ionen geringeren Durchmessers aus dem Material der Platte in die Salzschmelze austreten.

Es ist weiterhin bekannt, eine planparallele Platte vertikal zu haltern. Auf beiden Seiten der Platte sind mit entsprechenden Dichtflächen Schalen angesetzt, so daß beiderseits der Platte Hohlräume gebildet werden, die auf einer vertikalen Seitenfläche jeweils durch eine Oberfläche der Platte begrenzt und nach oben hin offen sind. In diese Hohlräume ist Salzschmelze eingefüllt. Die Schalen tragen eine Anode bzw. eine Kathode, so daß durch die Salzschmelze und die Platte hindurch ein elektrisches Feld erzeugt wird. Anodenseitig trägt die Platte wieder eine Maske (US-A- 3 627 491)

Durch die DE-A- 38 02 837 (EP-A- 0 326 920) ist eine Vorrichtung zur Durchführung feldunterstützten Ionenaustauschs in planparallelen Platten bekannt, bei welcher die Platte zwischen zwei Haltekörper aus Metall eingespannt ist. Die Haltekörper bilden beiderseits der Platte Hohlräume, die zu der Platte hin offen sind. Die Hohlräume sind von geschlossenen Dichtflächen umgeben, die an der Platte anliegen. Vorratsbehälter für Salzschmelze sind über Füllzuleitungen mit den unteren Enden der Hohlräume verbunden. Von den Hohlräumen gehen Entlüftungsleitungen ab.

Bei der Herstellung bestimmter Strukturen, beispielsweise von Ringresonatorstrukturen, bleiben elektrisch voneinander isolierte Maskenflächen auf dem Glassubstrat stehen. Es hat sich gezeigt, daß in diesen Fällen die gebildeten Wellenleiter erhebliche Störungen zeigen.

**Offenbarung der Erfindung**

Der Erfindung liegt die Aufgabe zugrunde, auch in den Fällen, in denen elektrisch voneinander isolierte Maskenflächen auftreten, störungsfreie Wellenleiter zu erzeugen.

Erfindungsgemäß wird diese Aufgabe dadurch gelöst, daß

(c) voneinander getrennte Flächenbereiche der Metallmaske elektrisch leitend miteinander verbunden werden.

Es hat sich überraschenderweise gezeigt, daß durch diese Maßnahme die Güte der erzeugten Wellenleiter erheblich verbessert werden kann. Vermutlich fließen bei den Verfahren nach dem Stand der Technik infolge von Potentialdifferenzen zwischen den elektrisch gegeneinander isolierten Flächenbereichen elektrische Ströme durch die elektrisch leitende Metallsalzfläche unmittelbar über der Oberfläche des Glassubstrats, in welcher der Ionenaustausch stattfinden soll. Durch diese Ströme wird der Ionenaustausch behindert. Dieser Effekt wird durch elektrisch leitende Verbindung der Flächenbereiche verhindert. Durch diese Verbindung werden die Potentiale der Flächenbereiche einander angeglichen.

Ausgestaltungen der Erfindung sind Gegenstand der Unteransprüche.

Ausführungsbeispiele der Erfindung sind nachstehend unter Bezugnahme auf die zugehörigen Zeichnungen näher erläutert.

**Kurze Beschreibung der Zeichnungen**

Fig.1 zeigt schematisch einen Längsschnitt durch eine Vorrichtung zur Durchführung eines Ionenaustauschs in einer planparallelen Platte.

Fig.2 zeigt eine Seitenansicht eines Haltekörpers bei der Vorrichtung von Fig. 1, bei welchem die Füllzuleitung durch einen Stöpsel bis zum Erreichen der Austauschtemperatur verschließbar ist.

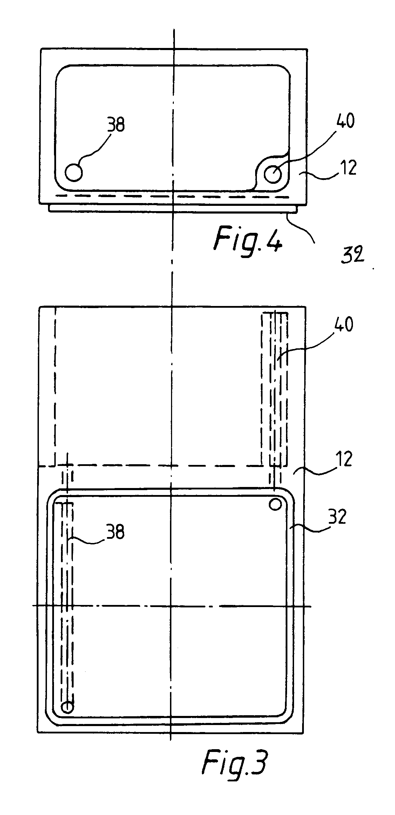

Fig.3 zeigt eine Ansicht eines Haltekörpers bei der Vorrichtung von Fig.1 von der Seite der zu bearbeitenden Platte her oder von links in Fig.2 gesehen.

Fig.4 zeigt eine Draufsicht des Haltekörpers von Fig.2 und 3.

Fig.5 zeigt als Seitenansicht von links in Fig.1 ein Glassubstrat mit einem Beispiel einer Wellenleiterstruktur, die mit einer Vorrichtung nach Fig.1 bis 4 herstellbar ist, wobei die voneinander elektrisch isolierten Flächenbereiche der die Wellenleiterstruktur definierenden Metallmaske durch Bonddrähte elektrisch miteinander verbunden sind.

Fig.6 zeigt einen Schnitt durch das Substrat längs der Linie V - V von Fig.5.

Fig.7 zeigt in einer Darstellung ähnlich Fig.5 eine abgewandelte Art der Verbindung der elektrisch isolierten Flächenbereiche, nämlich mittels eines Jochs.

Fig.8 zeigt einen Schnitt längs der Linie VIII - VIII von Fig,7.

**Bevorzugte Ausführungen der Erfindung**

Die Vorrichtung enthält zwei im wesentlichen übereinstimmende Haltekörper 10 und 12. Die Haltekörper 10 und 12 sind im wesentlichen quaderförmig. An ihren oberen Stirnflächen 14 und 16 bilden die beiden Haltekörper 10 bzw. 12 jeweils einen Vorratsbehälter 18 bzw. 20. für eine Salzschmelze. Die Vorratsbehälter 18 und 20 sind nach oben hin offen.

In den einander zugekehrten Seitenflächen 22 und 24 der Haltekörper 10 bzw. 12 sind Vertiefungen vorgesehen, welche Hohlräume 26 bzw. 28 bilden. Ringsherum um die Hohlräume 26 und 28 sind Dichtflächen 30 bzw. 32 gebildet.

Die Dichtflächen 30 und 32 sind sehr genau plan bearbeitet. Die Dichtflächen 30 und 32 stehen etwas gegenüber den Seitenflächen 22 bzw. 24 vor.

Der Hohlraum 26 ist durch eine Füllzuleitung 34 mit dem Vorratsbehälter 18 verbunden. Die Füllzuleitung 34 geht vom Grund des Vorratsbehälters 18 aus und mündet am unteren Ende des Hohlraumes 26. Vom oberen Ende des Hohlraumes 26 geht eine Entlüftungsleitung 36 aus. Die Entlüftungsleitung 36 ist längs der Wandung des Vorratsbehälters 18 geführt und mündet im oberen Teil des Vorratsbehälters dicht unterhalb von dessen Oberkante, also der oberen Stirnfläche 14.

In entsprechender Weise ist der Hohlraum 28 durch eine Füllzuleitung 38 mit dem Vorratsbehälter 20 verbunden. Die Füllzuleitung 38 geht vom Grund des Vorratsbehälters 18 aus und mündet am unteren Ende des Hohlraumes 28. Vom oberen Ende des Hohlraumes 28 geht eine Entlüftungsleitung 40 aus. Die Entlüftungsleitung 40 ist längs der Wandung des Vorratsbehälters 20 geführt und mündet im oberen Teil des Vorratsbehälters 20 dicht unterhalb von dessen Oberkante, also der oberen Stirnfläche 16.

Der Boden der Vorratsbehälter 18 und 20 liegt oberhalb des oberen Endes der Hohlräume 26 bzw. 28. Auf diese Weise ist sichergestellt, daß die Hohlräume 26 und 28 bis oben hin mit Salzschmelze gefüllt sind, sofern sich noch Salzschmelze in dem Vorratsbehälter 18 bzw. 20 befindet.

Zwischen den beiden Haltekörpern 10 und 12 ist eine planparallele Platte 42 gehalten. Die Platte 42 trägt auf ihrer dem Haltekörper 12 zugewandten, in der Figur rechten Seite eine Maske 44 aus einem Material, welches den Ionenaustausch in den von der Maske 44 abgedeckten Bereichen verhindert. Die Dichtflächen 30 und 32 liegen dicht an den Oberflächen der Platte 42 an.

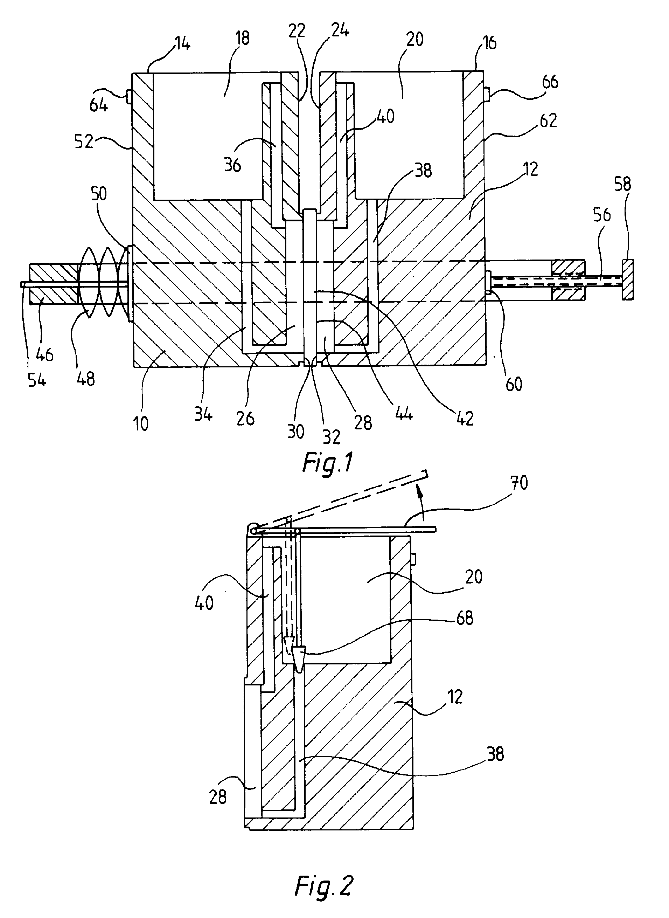

Die beiden Haltekörper sind aus einem elektrisch leitenden Material, nämlich aus Metall. Sie werden bei dem dargestellten Ausführungsbeispiel durch einen Klammerbügel 46 zusammengehalten. Auf der in Fig.1 linken Seite stützt sich an dem Klammerbügel 46 ein Satz von Tellerfedern 48 ab, die über eine Isolierung 50 an der der Seitenfläche 22 gegenüberliegenden Seitenfläche 52 des Haltekörpers 10 anliegen. Ein Zentrierstift 54 an der Isolierung 50 sorgt für die Zentrierung von Isolierung 50, Tellerfedern 48 und Klammerbügel 46.

Auf der entgegengesetzten Seite ist in dem Klammerbügel 46 eine Gewindespindel 56 geführt, die mittels eines Stellknopfes 58 verstellbar ist. Diese Gewindespindel 56 liegt über ein Isolierstück 60 an der der Seitenfläche 24 gegenüberliegenden Seitenfläche 62 des Haltekörpers 12 an. Auf diese Weise werden die beiden Haltekörper 10 und 12 mit definierter Kraft gegen die Platte 42 gedrückt. Die Gewindespindel 56 gestattet eine Einstellung dieser Andruckkraft. Die Tellerfedern 48 verhindern, daß die Andruckkraft zu groß werden und zu einer Beschädigung der Platte 42 führen kann.

Der Haltekörper 10 ist mit der negativen Klemme 64 einer Spannungsquelle verbunden und stellt daher eine Kathode dar. Der Haltekörper 12 ist mit der positiven Klemme 66 der Spannungsquelle verbunden und bildet die Anode.

Die Beschriebene Vorrichtung arbeitet wie folgt:

Die Platte 42 wird zwischen den beiden Haltekörpern 10 und 12 eingespannt. Die Dichtflächen 30 und 32 der Haltekörper bzw. 12 liegen auf gegenüberliegenden Seiten an den Oberflächen der Platte 42 längs der Ränder der Platte an. Dabei fluchten die Dichtflächen 30 und 32 miteinander, so daß keine Biegemomente an der Platte 42 wirksam werden. Die Platte kann sich daher nicht wie bei bekannten Vorrichtungen "tütenartig" verformen. Die Dichtflächen können daher mit ausreichender Kraft durch die Gewindespindel 56 und die Federn 48 an die Oberflächen der Platte 42 angedrückt werden, so daß eine sichere Abdichtung rings um die Platte herum erreicht wird.

Die Vorratsbehälter 18 und 20 werden mit einer Salzschmelze gefüllt, welche die positiven Ionen enthält, die gegen andere Ionen in dem Material der Platte 42 ausgetauscht werden sollen. Diese Salzschmelze fließt durch die Füllzuleitungen 34 und 38 in die Hohlräume 26 bzw. 28. Die Luft aus den Hohlräumen 26 und 28 strömt über die Entlüftungsleitungen 36 bzw. 40 ab. Es ist daher eine einwandfreie Füllung der Hohlräume mit der Salzschmelze ohne Blasenbildung gewährleistet. Die Hohlräume 26 und 28 sind dicht abgeschlossen. Es kann daher keine Salzschmelze an der Oberfläche der Platte entlangkriechen und eine leitende Verbindung zwischen den beiden Seiten der Platte 42 herstellen, wie das bei einer anderen bekannten Anordnung der Fall ist.

Zwischen die Haltekörper 10 und 12 wird eine Spannung angelegt, so daß positive Ionen aus der Salzschmelze im Vorratsbehälter 20 unter dem Einfluß des elektrischen Feldes in den von der Maske 44 freigelassenen Bereichen durch die ebenfalls erwärmte Platte 42 wandern und Ionen mit geringerem Ionendurchmesser verdrängen, die dann in die Salzschmelze im Hohlraum 26 gelangen. Es entstehen dann in den von der Maske 44 freigelassenen Bereichen Strukturen, insbesondere Wellenleiter, mit gegenüber dem Material der Platte 42 erhöhtem Brechungsindex.

Um definierte Zeitabläufe füe den feldunterstützten Ionenaustausch zu erhalten, ist es wünschenswert, die Schmelze nicht schon während der Hochlaufphase des Ofens in Kontakt mit dem Glassubstrat, der Platte 42, zu bringen. Die Hochlaufphase ist dabei die Zeit vom Erreichen der Schmelztemperatur der Schmelze bis zum Erreichen der eigentlichen Austauschtemperatur. Aus diesem Grund ist, wie in Fig.2 angedeutet ist, die Füllzuleitung 38 durch eie Art Stöpsel 68 zunächst abgeschlossen. Der Stöpsel 68 kann durch einen Mechanismus 70 herausgezogen werden, wie in Fig.2 schematisch angedeutet ist. Der Stöpsel ist ein einfacher Kegel aus dem gleichen Material wie die übrige Apparatur selbst. Der Stöpsel wird zum Dichten leicht eingepreßt.

Der Stöpsel 68 wird herausgezogen, wenn die Austauschtemperatur erreicht ist und unmittelbar bevor das Feld angelegt wird.

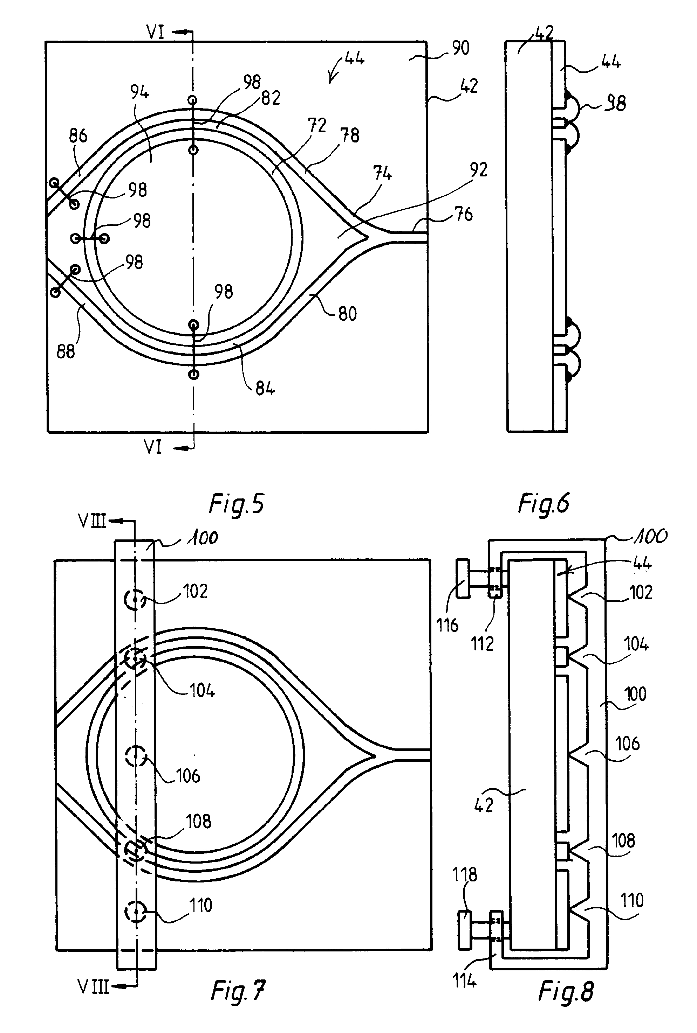

In Fig.5 ist die Oberfläche des Glassubstrats 42 mit einer Metallmaske 44 für die Herstellung von Wellenleitern für einen Ringresonator dargestellt. Die Wellenleiterstruktur enthält einen in sich geschlossenen, kreisförmigen Wellenleiter 72 und eine gabelförmige Wellenleiteranordnung 74. Die Wellenleiteranordnung 74 weist ein Eintrittsende 76 auf und verzweigt sich anschließend an dieses Eintrittsende 76 v-förmig in zwei Zweige 78 und 80. Die beiden Zweige 78 und 80 erstrecken sich um den kreisförmigen Wellenleiter 72 auf gegenüberliegenden Seiten herum, wobei sie in einem mittleren Bereich in geringem Abstand von dem kreisförmigen Wellenleiter 72 verlaufen und mit diesen Koppler 82 und 84 bilden. Die Zweige 78 und 80 laufen dann in Austrittsenden 86 bzw.88 aus. Bei der fertigen Wellenleiterstruktur wird im Betrieb über das Eintrittsende 76 eine Lichtwelle eingeleitet. Diese Lichtwelle wird über die Koppler 82 und 84 zum Umlauf entgegen dem Uhrzeigersinn bzw. im Uhrzeigersinn in den kreisförmigen Wellenleiter 7'2 eingekoppelt. Über die Koppler 82 und 84 kann gleichzeitig Licht aus dem kreisförmigen Wellenleiter ausgekoppelt werden. Diese Wellenleiterstruktur ist an sich bekannt und daher hier nicht im einzelnen diskutiert. Die Metallmaske 44 weist zur Herstellung dieser Wellenleiterstruktur entsprechende Schlitze auf, durch welche hindurch der Ionenaustausch zwischen der Oberfläche des Glassubstrats 42 und der Metallsalzschmelze im Raum 28 stattfindet.

Wie aus Fig.5 deutlich erkennbar ist, wird die Metallmaske 44 durch diese Schlitze in insgesamt vier gegeneinander elektrisch isolierte Flächenbereiche 90,92,94 und 96 unterteilt. Die hierdurch auftretenden Probleme hinsichtlich der Güte der hergestellten Wellenleiter werden dadurch vermieden, daß diese Flächenbereiche 90,92, 94 und 96 durch Brücken aus Bonddrähten 98 miteinander verbunden sind. Solche Bonddrähte sind bekannte Elemente und werden in der Halbleiterindustrie zur Bauteilkontaktierung benutzt. Beim Kaliumionenaustausch mit aluminiummaskierten Gläsern haben sich Bonddrähte aus Gold bewährt. Dadurch werden die verschiedenen Flächenbereiche 90,92,94 und 96 elektrisch miteinander verbunden, so daß sie auf gleichem Potential liegen. Es hat sich gezeigt, daß die Güte der hergestellten Wellenleiter durch diese Maßnahme erheblich verbessert wird.

Die Flächenbereiche 90,92,94 und 96 sind nicht nur miteinander sondern auch mit dem die Metallschmelze enthaltenden Behälter elektrisch leitend verbunden. Das wird bei der Anordnung von Fig.1 schon dadurch gewährleistet, daß der Haltekörper 12 mit der Dichtfläche 32 an den Flächenbereichen 90 und 96 der Metallmaske 44 anliegt, die ihrerseits mit den "Inseln" 92 und 94 über die Bonddrähte 98 verbunden sind.

Bei der Ausführung nach Fig.7 und 8 ist die Wellenleiterstruktur der herzustellenden Wellenleiter die gleiche wie bei der Ausführung von Fig.5 und 6. Entsprechende Teile tragen die gleichen Bezugszeichen wie dort. Die elektrische Verbindung der einzelnen Flächenbereiche erfolgt nach Fig.7 und 8 durch ein Joch 100 aus elektrisch leitendem Material, das mit Vorsprüngen 102, 104, 106, 108 und 110 an den Flächenteilen 90,92,94 und 96 anliegt und so eine elektrische Verbindung zwischen diesen Flächenteilen herstellt. Das Joch 100 weist nach innen abgewinkelte Enden 112 und 114 auf, welche um gegenüberliegende Ränder des Glassubstrats 42 herumgreift. In den Enden 112 und 114 sind Klemmschrauben 116 bzw. 118 geführt, die sich an der Rückseite des Glassubstrats abstützen und mittels derer das Joch 100 gegen die Metallmaske 44 festgezogen ist.

## Patentansprüche

1. Verfahren zur Herstellung von Wellenleitern in einem Glassubstrat durch Ionenaustausch, mit den Verfahrensschritten:

(a) Aufbringen einer Metallmaske (44) auf das Glassubstrat (42), wobei diese Metallmaske (44) die Bereiche der zu erzeugenden Wellenleiter (72,74) freiläßt,

(b) Inkontaktbringen des Glassubstrats (42) mit einer Metallsalzschmelze, welche die gegen Ionen des Glassubstrats (42) auszutauschenden Ionen enthält,

**dadurch gekennzeichnet, daß**

(c) voneinander getrennte Flächenbereiche (90,92,94, 96) der Metallmaske (44) elektrisch leitend miteinander verbunden werden.

2. Verfahren nach Anspruch 1, **dadurch gekennzeichnet, daß** die Flächenbereiche (90,92,94,96) der Metallmaske (44) durch Bonddrähte (98) elektrisch leitend miteinander verbunden werden.

3. Verfahren nach Anspruch 1, **dadurch gekennzeichnet, daß** die Flächenbereiche (90,92,94,96) der Metallmaske (44) durch ein elektrisch leitendes Joch (100) miteinander verbunden werden, das während des Ionenaustauschvorganges an dem Substrat (44) befestigt wird.

4. Verfahren nach einem der Ansprüche 1 bis 3, **dadurch gekennzeichnet, daß** die Flächenbereiche (90,92,94,96) mit einem die Metallschmelze enthaltenden, metallischen Behälter (12) elektrisch leitend verbunden werden.

## Claims

1. Method for Producing waveguides in a glass substrate by ion exchange, including the method steps of:
(a) applying a metal mask (44) to the glass substrate (42), said metal mask (44) leaving open the areas of the waveguides (72, 74) to be produced,
(b) contacting the glass substrate (42) with molten metal salt containing the ions to be exchanged for the ions of the glass substrate (42),
characterized in that
(c) surface areas (90, 92, 94, 96) of the metal mask (44), which are separated from each other, are electrically conductively interconnected.

2. Method according to claim 1, characterized in that the surface areas (90, 92, 94, 96) of the metal mask (44) are electrically conductively interconnected through bond wires (98).

3. Method according to claim 1, characterized in that the surface areas (90, 92, 94, 96) of the metal mask (44) are interconnected through an electrically conductive yoke (100) which is fixed to the substrate (44) during the ion exchange process.

4. Method according to any one of claims 1 to 3, characterized in that the surface areas (90, 92, 94, 96) are electrically conductively connected to a metal vessel (12) which contains the molten metal salt.

## Revendications

1. Procédé destiné à la fabrication de guides d'ondes dans un substrat de verre par échange d'ions, avec les étapes de procédé:
(a) application d'une masque métallique (44) sur le substrat de verre (42), ce masque métallique (44) laissant libre les zones des guides d'ondes a engendrer (72,74),
(b) mise en contact du substrat de verre (42) avec un bain de fusion de sel métallique comprenant les ions à échanger contre les ions du substrat de verre (42),
**caractérisé par le fait que**
(c) des zones de surface (90,92,94,96) du masque métallique (44) séparées l'une de l'autre sont reliées l'une à l'autre de manière électriquement conductive.

2. Procédé selon la revendication 1, **caractérisé par le fait que** les zones de surface (90,92,94,96) du masque métallique (44) sont reliées l'une à l'autre de manière électriquement conductive par des fils de bonding (98).

3. Pocédé selon la revendication 1, **caractérisé par le fait que** les zones du surface (90,92,94,96) du masque métallique (44) sont reliées l'une à l'autre par une culasse électriquement conductive (100) fixée lors du processus d'échange d'ions au substrat (44).

4. Procédé selon l'une des revendications 1 à 3, **caractérisé par le fait que** les zones de surface (90,92,94,96) sont reliées de manière électriquement conductive à un récipient métallique (12) comprenant bain de fusion de sel métallique.

Fig.1

Fig.2

Fig.4

Fig.3

Fig.5

Fig.6

Fig.7

Fig.8